Europäisches Patentamt

European Patent Office

Office européen des brevets

(11) Publication number: **0 284 143**
**A1**

## (12) EUROPEAN PATENT APPLICATION

(21) Application number: 88200480.7

(22) Date of filing: 14.03.88

(51) Int. Cl.4: **A23K 1/175 , A23K 1/16 ,
A23K 1/00**

(30) Priority: 13.03.87 GB 8705978

(43) Date of publication of application:
28.09.88 Bulletin 88/39

(84) Designated Contracting States:
AT BE CH DE ES FR GB GR IT LI NL SE

(71) Applicant: **UNILEVER NV**
**Burgemeester s'Jacobplein 1 P.O. Box 760**
**NL-3000 DK Rotterdam(NL)**

(84) **BE CH DE ES FR GR IT LI NL SE AT**

(71) Applicant: **UNILEVER PLC**
**Unilever House Blackfriars P.O. Box 68**
**London EC4P 4BQ(GB)**

(84) **GB**

(71) Applicant: **BP NUTRITION (UK) LIMITED**
**Wincham**
**Northwich Cheshire CW9 6DF(GB)**

(84) **BE CH DE ES FR GB GR IT LI NL SE AT**

(72) Inventor: **Perry, Frederick George**
**c/o BP Nutrition Limited Minsal Works**
**Wincham**
**Northwich Cheshire CW9 6DF(GB)**
Inventor: **Shore, Glynn Russell**
**Speenkruidstraat 38**
**NL-2555 PR The Hague(NL)**

(74) Representative: **Smulders, Theodorus A.H.J.**
**et al**
**Vereenigde Octrooibureaux Nieuwe Parklaan**
**107**
**NL-2587 BP 's-Gravenhage(NL)**

(54) **Animal feed.**

(57) The invention concerns an animal feed containing at least one edible vegetable material and a copper compound which comprises 20-200 ppm of a copper compound (calculated as free metal, based on the total weight of animal feed with 12% moisture), which compound has been coated with a fatty material having a melting point between 40 and 80°C.

## ANIMAL FEED

The invention relates to an animal feed additive, an animal feed containing the additive and a process for manufacturing the additive.

Feed additives for animals, particularly for live stock, containing various active materials have been known for a considerable time. These materials generally aim at increasing the growth rate. For example, certain antibiotics, other pharmaceuticals, vitamins and certain trace elements have been used as active materials. Some of these are metabolized in the stomach-intestinal digestive tract of the animals and consequently lose their activity quickly.

It has therefore been proposed to protect pharmaceuticals and other sensitive compounds by encapsulation in materials which are resistant to the conditions in the stomach-intestinal tract of the animals, thereby effecting a slow release of the active material in the intestinal tract and increasing the effect of the active material. In this respect, reference is made to the following publications: GB-A-1 217 365 (John Labatt Ltd), JP 32340 (Kokai 52117-780; Mitsubishi Chem. Ind.).

It has been recognized that certain trace metals, especially copper, if added to animal feed have a beneficial effect on the growth rate when related to feed intake (feed conversion ratio = FCR). It is probable that these metal ions have a beneficial effect on the intestinal flora, as well as an anti-microbial effect. Although sensitive compounds like certain pharmaceuticals are metabolized and inactivated by the action of, inter alia, certain micro-organisms in the intestinal tract, it will be clear that this cannot be the case with trace metal ions like those of copper. So far, unprotected copper ions have been supplemented as an animal feed additive at a level of 25-350 ppm in the animal feeding material (for pigs up to 175 ppm), but there has been concern about the amount because of environmental reasons, and legislation is being developed to reduce the amounts employed.

It has now been found that copper compounds coated with a fatty material can be successfully employed as an animal feed supplement at a relatively low copper concentration of 20-200 ppm level (grams of copper per 1000 kg feed) in the animal feeding material. Preferably this amount is between 30 and 175 ppm of copper calculated on the total animal feed (for the purpose of this calculation containing 12% moisture).

For this purpose a suitable copper compound is coated in accordance with the present invention with a fatty material having a melting point between 40 and 80°C and this coated additive is incorporated in an animal feed material containing at least one edible vegetable material.

The coating material normally is a fatty material from the group consisting of fatty acids, fatty acids salts or a fatty acid polyester, and is usually derived from a $C_{16}$-$C_{22}$ optionally substantially hydrogenated fatty acid.

Mixtures of such materials can also be used.

The fatty acid polyesters include di-and higher esters such as triglcyerides, and partial or full esters of pentaerythritol.

Preferably hydrogenated triglyceride is used, such as hydrogenated tallow, soybean oil, rape oil and coconut oil. Most preferred is hydrogenated tallow.

The amount of fatty material in the fat-coated feed additive is preferably 40-95 wt.%, more in particular 50-90 wt.%.

In another embodiment of the invention a copper salt is supplied to animals as a feed additive in the form of a copper compound coated with fatty material at a level of 20-200 ppm of free copper, the fatty material having a melting point between 40 and 80°C. Preferably the animals are pigs, although calves and sheep can also be considered.

The fat-coated, copper-containing feed additive according to the present invention can be conveniently prepared by a process which comprises a first preparation step, in which pre-formed particles consisting of a trace metal compound, in particular a copper compound, and fatty material are formed (preferably by spray-cooling). A second preparation step can be applied in which these pre-formed particles are brought onto a rotating and optionally heated disc where they are sprayed with molten fatty material free of feed additive and are in this manner converted into coated particles.

Preferably, by this process pre-formed particles are formed which consist for 15-95, preferably 60-90% by weight of fatty material.

The following copper compounds can be used in accordance with the present invention: water-soluble salts and other copper compounds which are converted in the intestinal tract into soluble copper salts. More in particular, copper acetate, copper methionate, copper hydroxycarbonate, copper chloride, copper sulphate and copper oxide are suitable copper compounds in accordance with the invention.

The fatty material is preferably a practically saturated fatty acid ester having an iodine number below 15 and is more particularly derived from $C_{16}$ to $C_{22}$ straight-chain fatty acids. Especially esters of polyvalent alcohols are suitable, both partial esters and full esters. Suitable alcohols are diols and triols, such as e.g. glycol, triethylene glycol and glycerol. Especially mono-, di-and triglycerides may be used with excellent results, but also suitable are e.g. fatty acids soaps derived from alkaline earth metals such as e.g. calcium and magnesium, also in combination with esters.

Although the process of preparing pre-formed particles already gives a sufficient surface coating on the copper compound, it is possible to improve the efficiency of the copper in the feed even further by the additional process step, described hereafter.

The fine-grained, pre-formed particles are optionally subsequently brought into a pan having a rotating, heated base plate. For this purpose the temperature of this base plate is chosen so that it lies below the melting point of the fatty material, and a layer of fatty material which is free of the feed additive is then applied to the moving, fine-grained feed additive. Preferably this layer is applied by spraying molten fatty material thereon, preferably as an atomized molten material.

The particle size of the feed additive can range from 20 μm up to 500 μm, depending on the application. Larger diameters do not offer additional advantages. Preferred mean particle sizes are between 200 and 400 μm.

The feed additive thus coated may subsequently be allowed to move a little longer and then drawn off. This process may be carried out both discontinuously (batch-wise) and continuously in a series of apparatuses.

The invention will now be illustrated by the following Examples.

## Example 1

35 parts of copper sulphate were suspended in 65 parts of molten, hydrogenated tallow at a temperature of 65-70°C. The suspension thus obtained was sprayed into a spraying tower at a spraying temperature of 65-70°C and a pressure of about $250.10^3$ Pa. The temperature at the bottom of the spraying column was 25°C. The average particle size of the particles was about 400 ppm. The material thus obtained contained 20% by weight of copper.

## Example 2

Example 1 was repeated and subsequently a finishing step was applied in which the particles were coated with a molten hydrogenated tallow on a rotating disc. The double-coated material contained 18% of copper sulphate by weight.

## Example 3

The encapsulated copper sulphate as described in Example 1 was employed as an additive to a pig feed with composition as follows:

|  | g/kg |
|---|---|
| Oil | 61.0 |
| Protein | 222.0 |
| Fibre | 35.0 |
| Ash | 54.0 |
| Lysine | 13.0 |
| Calcium | 8.0 |
| Phosphorus | 6.0 |
| Salt | 4.0. |

The performance of a 100 ppm dose of coated material was analysed and compared to dosages of 40 ppm and 175 ppm free copper (as copper sulphate).

The use of 100 ppm coated copper produced results similar to those produced by the 175 ppm of free copper, which gave an improved daily gain in weight by 15.7% and improved FCR by 11.5% compared to a 40 ppm free copper requirement treatment. The average daily feed intake increased by 3.8% from 1581 to 1641 grams per day.

Examples 4 and 5, comparative examples a and b

Various amounts of copper sulphate were added to the feed of 4 batches of 16 pigs each.
After 25 days the daily weight gain was determined. The results are given in the table.

**Table**

| Example | a | 4 | b | 5 |
|---|---|---|---|---|
| Cu-added[*] (ppm) | 250 | 175 | 175 | 100 |
| DWG[**] (grams) | 497.5 | 752.9 | 540.4 | 671.3 |

[*] calculated as copper; product of Example 1.
[**] daily weight gain.

## Claims

1. An animal feed containing at least one edible vegetable material and a copper compound which comprises 20-200 ppm of a copper compound (calculated as free metal, based on the total weight of animal feed with 12% moisture), which compound has been coated with a fatty material having a melting point between 40 and 80°C.

2. An animal feed as claimed in claim 1, which comprises the copper compound in an amount of 30-175 ppm of copper based on the total weight of the animal feed.

3. An animal feed as claimed in claim 1 or 2, which comprises a fatty material containing a fatty ester.

4. An animal feed as claimed in claim 3, in which the fatty ester is derived from $C_{16}$-$C_{22}$ fatty acid.

5. A process for the preparation of a coated animal feed additive according to claim 1, which comprises a first preparation step, in which pre-formed particles consisting of a feed additive and fatty material are formed, preferably by spray cooling.

6. A process as claimed in claim 5, in which subsequently a second preparation step is applied wherein the pre-formed particles are brought onto a rotating and optionally heated disc where they are sprayed with molten fatty material free of feed additive and are in this manner converted into coated particles.

7. A process according to claim 5 or 6, in which, in the first preparation step, pre-formed particles are formed which consist of 15-95, preferably 60-90% by weight of fatty material.

8. A process according to claim 6 or 7, in which, in the second preparation step, molten fatty material is sprayed on in an amount such that this forms 10-50, preferably 15-35% by weight, calculated on the weight of the pre-formed particles.

9. A process according to any one of the claims 6-8, in which the heated plate is kept at a temperature which is below the melting point of the fatty material.

10. A process for supplying a copper salt to animals, which comprises feeding said animals at least one edible vegetable material and a coated copper salt in an amount of 20-200 ppm of free copper, which copper salt has been coated with a fatty material having a melting point between 40 and 80°C.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,Y | EP-A-0 125 894 (BP NUTRITION (UK) LTD) * Claims 2-6,9-15; page 2, lines 8-13; page 3, line 21 - page 4, line 31; page 5, line 28 - page 6, line 2 * | 1-5,7, 10 | A 23 K 1/175 A 23 K 1/16 A 23 K 1/00 |
| Y | FR-A-2 049 322 (J.-P.M. RAUDNITZ) * Claims 1,8; page 2, example * | 1,2,10 | |
| X | GB-A- 780 022 (NOPCO CHEMICAL CO.) * Claims 1,4; page 1, lines 11-14; page 2, lines 9-19,32-38; example IV; page 6, lines 36-45 * | 1,3-5,7 ,10 | |
| X | GB-A- 784 601 (VITAMINS LTD) * Claims 1,2; page 2, examples 1-3 * | 1,5,10 | |
| A | GB-A-2 113 521 (BALFOUR MANUFACTURING CO., LTD) * Claims 1,2 * | 1 | |
| A | WO-A-8 502 322 (P.J. COX) * Claims 1,40,43-45,52-54,58; page 22, lines 9-19; page 36, line 16 * | 1,10 | TECHNICAL FIELDS SEARCHED (Int. Cl.4) |
| A | US-A-3 535 419 (J.C. SIEGRIST et al.) * Column 1, lines 10-22,70 - column 2, line 3; column 2, line 69 - column 3, line 21 * | 1,3,4 | A 23 K A 61 K |
| A | US-A-3 692 529 (L.J. RYCHMAN) * Claim 1; column 2, lines 16-20; examples 2,4 * | 1 | |
| A | GB-A-1 050 665 (FEED SERVICE CORP.) * Claims 1-7; examples 5,10,12,20,26,32,35,37 * | 1,10 | |

-/-

The present search report has been drawn up for all claims

| Place of search | Date of completion of the search | Examiner |
|---|---|---|
| THE HAGUE | 20-06-1988 | DEKEIREL M.J. |

EPO FORM 1503 03.82 (P0401)

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | WO-A-8 700 045 (ICI AUSTRALIA LTD) <br> * Claims 1,14,15,16,25,26,27 * | 1 | |

TECHNICAL FIELDS SEARCHED (Int. Cl.4)

The present search report has been drawn up for all claims

| Place of search | Date of completion of the search | Examiner |
|---|---|---|
| THE HAGUE | 20-06-1988 | DEKEIREL M.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)